# EUROPÄISCHE PATENTANMELDUNG

(11) **EP 1 473 482 A1**
(43) Veröffentlichungstag der Anmeldung: **03.11.2004**
(21) Anmeldenummer: 04004299.6
(22) Anmeldetag: 26.02.2004
(51) Int. Cl.: F16F 9/05

(54) **Niveauregelbare Luftfeder**

(30) Priorität: 02.05.2003 DE 10319669
(71) Anmelder: Continental Aktiengesellschaft, 30165 Hannover (DE)
(72) Erfinder: Gleu, Jens-Uwe, Dr., 30855 Langenhagen (DE)

(57) **Zusammenfassung**

2.1 Eine niveauregelbare Luftfeder (2) weist zwei abstandsvariable Endglieder (Luftfeder-Deckel, 4 und Luftfeder-Kolben, 6) auf, die außer über einen flexiblen Luftfederbalg (8) über eine auf Zug beanspruchbare Schrauben- oder Spiralfeder (14) oder ein ebenfalls auf Zug beanspruchbares, aus elastomerem Material bestehendes Band (14) miteinander verbunden sind.
2.2 Um innerhalb der Luftfeder (2) eine Längenmessung (Höhenmessung) mit nichtmagnetischen Mitteln durchführen zu können, weist das elastische Element (14) einen mechano-elektrischen Sensor (20) auf, der vorzugsweise ein Dehnmessstreifen (DMS) ist, und in eine als elektrische Messbrücke ausgebildete Messschaltung integriert ist. Diese Messschaltung kann in ein zum Luftfedersystem gehöriges Steuergerät integriert sein.
2.3 Der erfindungsgemäße Sensor (20), der bei allen Luftfederanwendungen einsetzbar ist, kann bisherige Niveausensorik vollständig ersetzen und kann damit auch deren Mehrfachfunktionen übernehmen.

## Beschreibung

### Anwendungsgebiet und Zweck der Erfindung

Die Erfindung betrifft eine niveauregelbare Luftfeder mit einer Höhenmesseinrichtung gemäß dem Oberbegriff des Anspruchs 1.
Um die Möglichkeiten voll ausschöpfen zu können, werden Luftfedern mit Niveauregeleinrichtungen ausgestattet. Hierzu ist die Verwendung eines Höhensensors erforderlich.

### Stand der Technik

Ein in ContiTech-Luftfedersystemen eingesetzte Höhensensor besteht aus einem Paar gegenläufiger Kegelfedern, die zwischen Luftfeder-Deckel und -Kolben aufgespannt sind. Mit Änderung der lichten Höhe des Luftfederinnenraums ergibt sich eine entsprechende Änderung der Induktivität der mehr oder weniger gelängten Kegelfedern.
Die Induktivität von längenveränderlichen Schraubenfedern zur Längenmessung (Höhenmessung) zu verwenden, ist auch aus der Klasse G 01 D (Messinstrumente) bekannt. Einzelheiten sind z. B. den Schriften DE-OS 22 11 359, DE-PS 32 05 705 C2, DE-OS 36 35 787 A1 und DE-OS 44 37 939 A1 zu entnehmen.

Gemäß einer Ausführungsvariante der in der DE 100 23 622 A1 beschriebenen Luftfeder ist zwischen den beiden abstandsvariablen Endglieder ein elastisches Band gespannt. Dieses Band ist mit ferromagnetischen Partikeln durchsetzt und bildet einen Teil eines magnetischen Kreises. Bei einer Längenänderung des elastischen, mit ferromagnetischen Partikeln durchsetzten Bandes aufgrund einer Änderung der Federhöhe ergibt sich eine Querschnittsänderung des Bandes, was eine Änderung des magnetischen Widerstandes zur Folge hat.

Die vorliegende Erfindung verwendet zwar ebenfalls ein zwischen den beiden abstandsvariablen Luftfeder-Endgliedern gespanntes, elastisches Element, strebt aber eine Lösung an, die eine Federhöhenmessung ohne Auswertung magnetischer oder elektromagnetischer Erscheinungen ermöglicht.

Die DE-OS 199 56 009 A1 beschreibt ein Verfahren zum Ermitteln des Abstands zweier, voneinander beabstandeter Punkte A, B. Zu diesem Zweck werden die beiden Enden eines flexiblen Stabes jeweils mit einem der beiden Punkte A und B verbunden. Bei Verringerung des Abstandes zwischen A und B wird der zuvor geradlinige Stab mehr oder weniger C- oder S-förmig gestaucht, es entsteht eine Krümmung der ursprünglich geradlinigen Stabachse.
Die sich auf der konvexen Seite ergebende Dehnung und/oder die sich auf der konkaven Seite des Stabes ergebende Stauchung kann mit Hilfe eines Dehnmessstreifens ermittelt werden, was wiederum in unmittelbarem Zusammenhang mit dem zu bestimmenden Abstand (Länge) A, B steht.

### Aufgabe, Lösung und Vorteile der Erfindung

Die im wesentlichen mit Anspruch 1 gelöste Aufgabe der vorliegenden Erfindung besteht darin, innerhalb einer Luftfeder eine Längenmessung (Höhenmessung) mit nichtmagnetischen Mitteln durchzuführen, wobei das Sensorelement nicht ausschließlich auf Stauchung sondern vorzugsweise auf Zug funktionieren soll.
Vorteilhafte Ausgestaltungen ergeben sich aus den Unteransprüchen.

Als Messgrundlage für die Bestimmung der momentanen lichten Höhe des Luftfederinnenraums wird die Größe der elastischen Deformation eines zwischen den abstandsvariablen Endgliedern in die Luftfeder eingebauten elastischen Elements, z. B. einer Schraubenfeder, verwendet, wobei die Deformation über einen auf das elastische Element applizierten, mechano-elektrischen Wandler elektrisch erfasst wird.

Die Wegkopplung der Anbindungspunkte des elastischen Elements an die Luftfeder reduzieren das Messergebnis auf eine Deformationsmessung, die direkt z. B. mittels Dehnmessstreifen (DMS) erfassbar ist. Eine Auswertung der zur Deformation gehörigen Kraft ist nicht erforderlich, weshalb Materialermüdung im elastischen Element keine Rolle spielt.
Es wird die tatsächliche aktuelle Einbaulänge der Luftfeder gemessen und nicht über Gestänge o. ä. in ein anderes Signal umgewandelt und somit nur indirekt gemessen.

Das elastische Element weist eine gewisse Vorspannung auf und wird vorzugsweise ausschließlich auf Zug beansprucht. Dadurch ergibt sich eine weitgehend lineare "Kennlinie".
Die druckkraftfreie Ausführung verhindert ein Abknicken des elastischen Elements und stabilisiert eigendynamische Querbewegungen. Die Ausführung des elastischen Elements als Schrauben- oder Spiralfeder ist sehr kostengünstig.

Bei dem mechano-elektrischen Sensor handelt es sich vorzugsweise um einen Dehnmessstreifen, der auf die elastische Schraubenfeder, z. B. eine einfache Stahlfeder, aufgeklebt ist. Eine derartige DMS-Applikation kann als industrieller Massenartikel hergestellt werden.
Die feuchtigkeits- und mechanisch empfindliche DMS-Applikation wird durch das getrocknete Luftklima innerhalb der Luftfeder und die Anordnung innerhalb der Luftfeder geschützt.

Der in das elastische Element integrierte, mechano-elektrische Sensor kann zu dem elastischen Element in Serie oder parallel geschaltet sein.
Statt Dehnmessstreifen können auch sonstige Biege- oder Torsions-Sensoren zum Einsatz gelangen.

Um eine Temperaturabhängigkeit so gering wie möglich zu halten, wird vorgeschlagen, den Dehnmessstreifen in Form einer temperaturkompensierten Messbrücke vorzuhalten.

Der Brückenmessverstärker kann dann Teil des zum Luftfedersystem gehörenden Steuergeräts sein.
Die Applikation einer temperaturkompensierten DMS-Brücke auf dem elastischen Element in einer separaten industriellen Fertigung ist robust und kostengünstig.
Es wird ausgenutzt, dass die für das Messprinzip erforderliche Verstärkerschaltung in dem für das Luftfedersystem ohnehin erforderliche Steuergerät quasi kostenneutral integriert werden kann.

Der erfindungsgemäße Sensor, der bei allen Luftfederanwendungen (LKW, NKW, Schienefahrzeuge, Fahrerhaus, Maschinenlager, ...) einsetzbar ist, kann bisherige Niveausensorik vollständig ersetzen und kann damit auch deren Mehrfachfunktion übernehmen (Skyhook-Sensierung der Achsbewegung, Leuchtweitensignalgeber, ...).

### Zeichnung

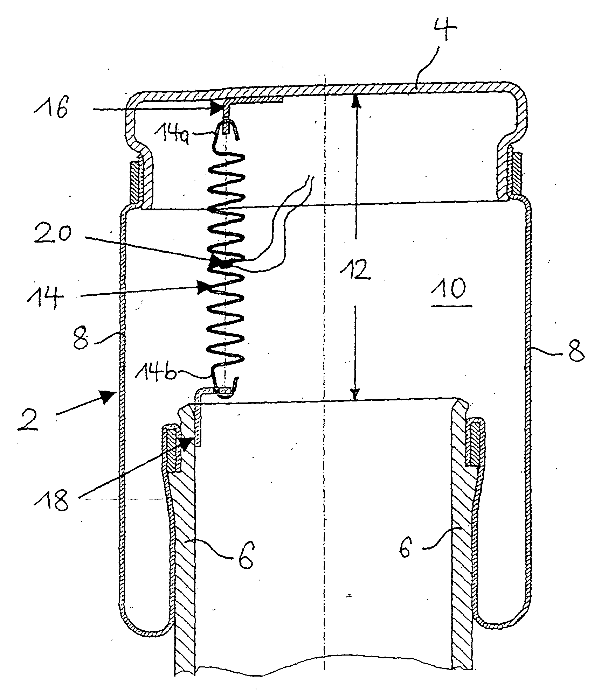

Das Grundprinzip der Erfindung wird anhand des in der beigefügten Zeichnung dargestellten Ausführungsbeispiels erläutert.

### Beschreibung

Die im Längsschnitt dargestellte Luftfeder 2 besteht im wesentlichen aus zwei abstandsvariablen Endgliedern 4, 6 (Luftfeder-Deckel 4 und Luftfeder-Kolben 6), die beide über einen Rollbalg 8 miteinander verbunden sind und gemeinsam ein Luftfedervolumen 10 umschließen.

Zwecks Bestimmung der lichten Höhe 12 des Luftfederinnenraums 10 ist erfindungsgemäß zwischen die beiden Endglieder 4, 6 ein elastisches Element 14 gespannt. Im vorliegenden Ausführungsbeispiel ist dieses elastische Element 14 eine auf Zug beanspruchbare Schraubenfeder. Alternativ kann auch eine Spiralfeder oder ein Band aus elastomerem Material zur Anwendung gelangen. Das eine Ende 14a des elastischen Elements 14 ist mittels einer Anbindung 16 im Deckelbereich befestigt, während das andere Ende 14b mittels einer weiteren Anbindung 18 am Abrollkolben 6 angebracht ist.

An die Schraubenfeder 14 ist ein mechano-elektrischer Sensor 20 appliziert. Im vorliegenden Beispiel handelt es sich dabei um einen, auf die Feder 14 aufgeklebten Dehnmessstreifen (DMS) 20. Im Fall einer Längenänderung der Schraubenfeder 14 aufgrund einer Änderung der Luftfeder- 12 bzw. Fahrzeughöhe ergibt sich eine Dehnung oder eine Torsion des Dehnmessstreifens 20, was als Änderung des elektrischen Widerstandes messbar ist. Der die Federhöhe 12 repräsentierende elektrische Widerstand dient als Grundlage für eine Niveauregelung der Luftfeder 2.

### Bezugszeichenliste

- 2: Luftfeder
- 4,6: (abstandsvariable) Endglieder
- 4: (Luftfeder-)Deckel
- 6: (Luftfeder-)Kolben
- 8: Rollbalg, Luftfederbalg
- 10: Luftfedervolumen, Luftfederinnenraum
- 12: lichte Höhe des Luftfederinnenraums, Luftfederhöhe
- 14: elastisches Element, Schraubenfeder, Spiralfeder, Feder
- 14a, 14b: Enden des elastischen Elements 14
- 16: Anbindung im Deckelbereich
- 18: (weitere) Anbindung am Abrollkolben
- 20: mechano-elektrischer Sensor, mechano-elektrischer Wandler,
Dehnmessstreifen (DMS)

## Patentansprüche

1. Niveauregelbare Luftfeder (2) mit zwei abstandsvariablen Endgliedern (4, 6), die außer über einen flexiblen Luftfederbalg (8) über ein elastisches Element (14) miteinander verbunden sind,
wobei das elastische Element (14) eine Schrauben- oder Spiralfeder oder ein aus elastomerem Material bestehendes Band ist,
**dadurch gekennzeichnet,**
**dass** das elastische Element (14) einen mechano-elektrischen Sensor (20) aufweist.

2. Luftfeder nach Anspruch 1,
**dadurch gekennzeichnet,**
**dass** das elastische Element (14) in seiner spannungslosen Länge so bemessen ist, dass es über den gesamten Federbereich der Luftfeder (2) ausschließlich auf Zug belastet wird.

3. Luftfeder nach einem der Ansprüche 1 oder 2,
**dadurch gekennzeichnet,**
**dass** der mechano-elektrische Sensor (20) in das elastische Element (14) integriert ist.

4. Luftfeder nach einem der Ansprüche 1 bis 3,
**dadurch gekennzeichnet,**
**dass** der mechano-elektrische Sensor (20) zu dem elastischen Element (14) in Serie oder parallel geschaltet ist.

5. Luftfeder nach einem der Ansprüche 1 bis 4,
**dadurch gekennzeichnet,**
**dass** der mechano-elektrische Sensor (20) ein Dehnungsmessstreifen (DMS) ist.

6. Luftfeder nach einem der Ansprüche 1 bis 4,
**dadurch gekennzeichnet,**
**dass** der mechano-elektrische Sensor (20) ein Biege- oder ein Torsionssensor ist.

7. Luftfeder nach einem der Ansprüche 1 bis 6,
**dadurch gekennzeichnet,**
**dass** der mechano-elektrische Sensor (20) in eine als elektrische Messbrücke ausgebildete Messschaltung integriert ist.

8. Luftfeder nach Anspruch 7,
**dadurch gekennzeichnet,**
**dass** die Messschaltung in ein zum Luftfedersystem gehöriges Steuergerät integriert ist.

9. Luftfeder nach einem der Ansprüche 7 oder 8,
**dadurch gekennzeichnet,**
**dass** die Messbrücke temperaturkompensiert ist.
